# EUROPEAN PATENT APPLICATION

(11) **EP 1 939 231 A1**
(43) Date of publication of application: **02.07.2008**
(21) Application number: 06797134.1
(22) Date of filing: 31.08.2006
(51) Int. Cl.: C08F 283/06, C08G 18/63, C09J 151/08

(54) **(METH)ACYLATE-GRAFTED POLYETHER POLYOL, AND PROCESS FOR PRODUCTION AND USE THEREOF**

(30) Priority: 02.09.2005 JP 2005254898
(71) Applicant: Mitsui Chemicals Polyurethanes, Inc., Tokyo 105-7117 (JP)
(72) Inventor: KUNIHIRO, Tamotsu, Sodegaura-shi, Chiba 299-0265 (JP); MATSUMOTO, Shinsuke, Sodegaura-shi, Chiba 299-0265 (JP); IWA, Tsuyoshi, Sodegaura-shi, Chiba 299-0265 (JP); MURAYAMA, Kouichi, Sodegaura-shi, Chiba 299-0265 (JP)
(74) Representative: HOFFMANN EITLE
(86) International application number: PCT/JP2006/317174
(87) International publication number: WO 2007/026798

(57) **Abstract**

A (meth)acrylate-grafted polyether polyol produced by reacting 40 to 95 parts by weight of a polyoxyalkylene polyol and 5 to 60 parts by weight of a vinyl monomer, both relative to 100 parts by weight of the sum total of the polyoxyalkylene polyol and the vinyl monomer, and 0.1 to 5 moles of an alkyl peroxide as a radical initiator per mole of the hydroxyl group in the polyoxyalkylene polyol, wherein the polyoxyalkylene polyol has a hydroxyl number of 25 mg KOH/g or less, and the vinyl monomer contains a (meth)acrylate and/or a hydroxyl-containing (meth)acrylate in an amount of 50% by weight or higher. The (meth)acrylate-grafted polyether polyol is excellent in colorless-transparency, compatibility, mechanical strength, weather resistance, and blending resistance, and therefore is useful as a raw material for a polyurethane resin cured article.

## Description

### Technical Field

The present invention relates to a novel polyether polyol and a method for production of the same, and use of the polyether polyol. More specifically, the present invention relates to a polyether polyol in which (meth)acrylate was grafted to a polyether polyol having a low hydroxyl number, and a process for production of the same.

### Background Technology

Polyether polyols are widely used as raw materials for polyurethane resin. When this polyether polyol is used without modification, there have been problems that a polyurethane resin cured article which has sufficient mechanical strength cannot be obtained, and that the obtained article is easy to be decomposed due to ultraviolet radiation over a long time of period. Thus for an application requiring high degree of hardness, for example, it has frequently been used in a form of a polymer polyol, in which a vinyl polymer is dispersed. The polymer polyol, for example, as described in Patent Document 1 (Japanese Examined Patent Application S41-3473), is produced by causing polymerization of a vinyl monomer, such as an acrylate in the presence of azobisisobutyronitrile or benzoyl peroxide as polymerization catalysts in polyols. However, the polymer polyol produced using azobisisobutyronitrile or benzoyl peroxide as the catalyst is normally turbid and there was a problem that its application is limited.

However, a graft copolymer of olefins with a polyoxyalkylene compound is disclosed in Patent Document 2 (Japanese Examined Patent Application S47-47999). The catalyst used is a peroxide that has a peroxide group bonded to a tertiary carbon atom, and the graft copolymer synthesized using this catalyst is disclosed as providing transparency. The document also discloses examples of olefins, which include hydrocarbon olefins, olefinic nitrites, alkenyl esters of saturated aliphatic carboxylic acids, alkyl acrylates, alkyl methacrylates, and unsaturated fatty acids. However, cured polyurethane resins including the graft copolymer still have room for improvement of mechanical strength and long-term weathering resistance. Thus further improvements are required in these characteristics.

In order to obtain a polyurethane resin cured article that has excellent mechanical strength particularly with flexibility, use of a polyether polyol of high molecular weight is effective. But there have been problems that a transparent resin cannot be obtained due to poor compatibility with acrylic resin of other ingredients added to improve long-term weathering resistance, and that the resin article surface is sticky, which means poor bleed resistance.
Patent Document 1: Japanese Examined Patent Application No. S41-3473
Patent Document 2: Japanese Examined Patent Application No. S47-47999

### Disclosure of the Invention

### Problem to Be Solved by the Invention

The present invention is directed to solve the problems associated with the conventional technology described above. The objective of the present invention is: to provide a polyether polyol that is excellent in colorless-transparency and compatibility, and a method for production of the same, to provide a polyurethane resin composition using the polyether polyol, and to provide a polyurethane resin cured article that is colorless and transparent and has excellent mechanical strength, weathering resistance, and bleed resistance.

### Means to Solve the Problems

As a result of dedicated research to solve the above-mentioned problems, the inventors of the present invention completed the present invention by the fact that a polyether polyol obtained by grafting a vinyl monomer containing at least 50% by weight of (meth)acrylate to a polyoxyalkylene polyol having low hydroxyl number in the presence of an alkyl peroxide, which is a radical reaction initiator, is excellent in colorless-transparency and compatibility, and that the polyurethane resin cured article using the polyether polyol is colorless and transparent and has excellent mechanical strength, weathering resistance and bleed resistance.

That is to say, the (meth)acrylate-grafted polyether polyol according to the present invention is obtained by causing reaction of the following compounds: 40 to 95 parts by weight of a polyoxy of a polyoxyalkylene polyol having a hydroxyl number of 25 mg KOH/g or less; 5 to 60 parts by weight of a vinyl monomer having at least 50% by weight of a (meth)acrylate expressed by the formula (1) below and/or a (meth)acrylate having a hydroxyl group expressed by the formula (2) below (wherein, total weight of the polyoxyalkylene polyol and the vinyl monomer is 100 parts by weight); and 0.1 to 5 mol of an alkyl peroxide, which is a radical reaction initiator, per 1 mol of hydroxyl group of the polyoxyalkylene polyol:

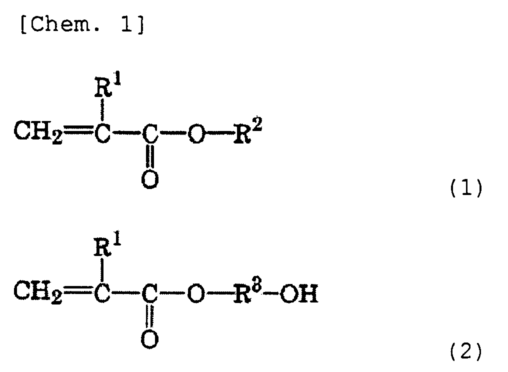

In the formulae, R¹ represents a hydrogen atom or a methyl group; R² represents an alkyl group having 1 to 18 carbon atom(s) or an aralkyl group having 7 to 18 carbon atoms; and R³ represents an alkylene group having 1 to 18 carbon atom(s). The above-mentioned polyoxyalkylene polyol is preferably a polyoxyalkylene polyol obtained by addition polymerization of an alkylene oxide with an active-hydrogen compound in the presence of a phosphazenium catalyst.

The above-mentioned (meth)acrylate-grafted polyether polyol preferably has a light transmittance of 30% or less at 300 nm, and of 90% or greater at 500 nm, when measured with a spectrophotometer.

The above-mentioned polyoxyalkylene polyol preferably has 1 to 8 hydroxyl group(s) within one molecule.
A two-component curable polyurethane resin composition and a one-component curable polyurethane resin composition according to the present invention are compositions which use the above-mentioned (meth)acrylate-grafted polyether polyol.

An adhesive according to the present invention comprises the above mentioned (meth)acrylate-grafted polyether polyol.
A polyurethane resin cured article according to the present invention is obtained by reacting an isocyanate compound with the (meth)acrylate-grafted polyether polyol, and causing curing.
A production method for the (meth)acrylate-grafted polyether polyol according to the present invention comprises causing reaction of the following compounds: 40 to 95 parts by weight of a polyoxyalkylene polyol having a hydroxyl number of 25 mg KOH/g or less; 5 to 60 parts by weight of a vinyl monomer having at least 50% by weight of a (meth)acrylate expressed by the formula (1) below and/or a (meth)acrylate having a hydroxyl group expressed by the formula (2) below (wherein the total weight of the polyoxyalkylene polyol and the vinyl monomer is 100 parts by weight); and 0.1 to 5 mol of an alkyl peroxide, which is a radical reaction initiator, per 1 mol of hydroxyl group of the polyoxyalkylene polyol:

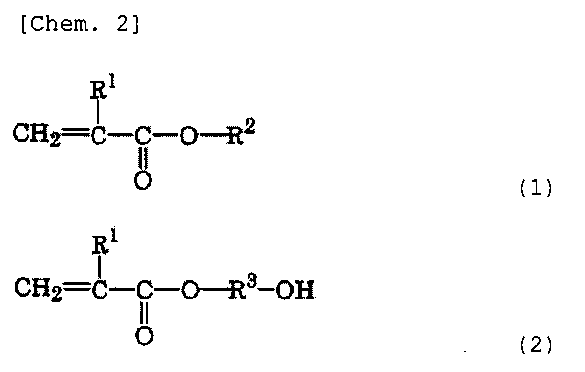

- In the formulae, R¹ represents a hydrogen atom or a methyl group; R² represents an alkyl group having 1 to 18 carbon atom(s) or an aralkyl group having 7 to 18 carbon atom(s); and R³ represents an alkylene group having 1 to 18 carbon atom(s).

According to the present invention, it is possible to obtain a polyether polyol which is excellent in colorless-transparency, and compatibility, and it is possible to obtain a colorless and transparent polyurethane cured article which has excellent mechanical strength, weathering resistance, and bleed resistance.

### Best Mode for Carrying out the Invention

### [Grafted Polyether Polyol]

The (meth)acrylate-grafted polyether polyol according to the present invention (referred to hereinafter as the "grafted polyether polyol") is a polyol obtained by reacting a polyoxyalkylene polyol having low hydroxyl number with the vinyl monomer having at least 50% by weight of the (meth)acrylate expressed by the formula (1) below and/or the (meth)acrylate having a hydroxyl group expressed by the formula (2) below in the presence of the alkyl peroxide, which is a radical reaction initiator.

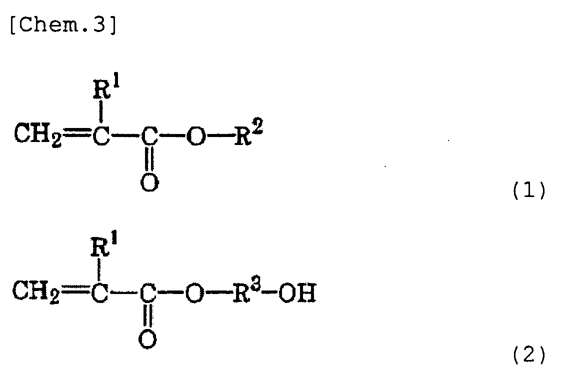

In the formulae (1) and (2), R¹ represents a hydrogen atom or a methyl group; R² represents an alkyl group having 1 to 18 carbon atom(s) or an aralkyl group having 7 to 18 carbon atoms; and R³ represents an alkylene group having 1 to 18 carbon atom(s).

The grafted polyether polyol according to the present invention preferably has a structure where the ester group derived from the above-mentioned (meth)acrylate indicated by the formula (1) or the formula (2) is bonded by grafting to the alkylene group of the polyoxyalkylene polyol.

### (Polyoxyalkylene Polyol)

The polyoxyalkylene polyol used for the present invention has a hydroxyl number of 25 mg KOH/g or less, preferably 1 to 22 mg KOH/g, and more preferably 2 to 20 mg KOH/g. Moreover, the total degree of unsaturation is preferably 0.04 meq/g or less. When the hydroxyl number and the total degree of unsaturation are within the above-mentioned ranges, it is possible to obtain a cured article that has excellent flexibility and mechanical strength.

Such polyoxyalkylene polyol can be produced by a ring-opening polymerization of an alkylene oxide with an active-hydrogen compound in the presence of cesium hydroxide, a cyano complex of a composite metal, such as a cyano complex of zinc and cobalt, or a phosphazenium catalyst, which has a nitrogen-phosphorous double bond, such as phosphazene and phosphazenium. According to the present invention, the used catalyst is preferably removed after completion of the ring-opening polymerization. Among these catalysts, the phosphazenium catalyst is preferred from a viewpoint of obtaining polyoxyalkylene polyol with a lower hydroxyl number.

Examples of the phosphazenium catalyst include the phosphazenium salt of the active-hydrogen compound indicated by the following formula (3) and the phosphazenium hydroxide indicated by the following formula (4).

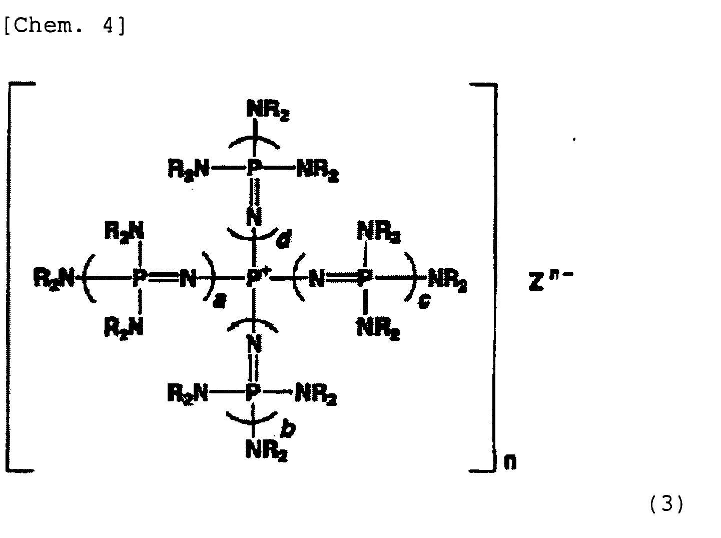

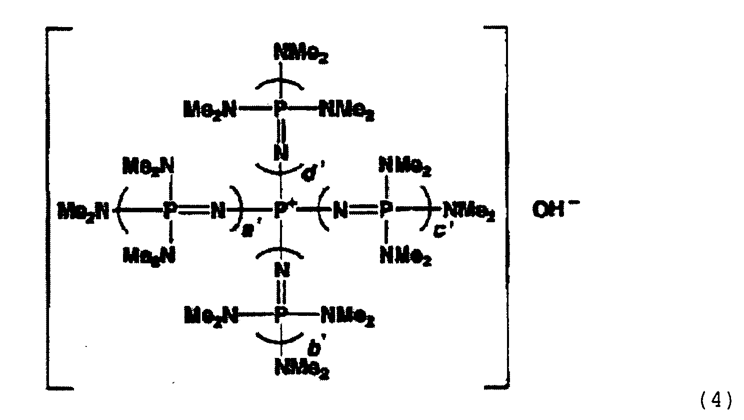

In the formula (3), n is an integer ranging from 1 to 8 and represents the number of phosphazenium cation. Zⁿ⁻ represents an anion of the active-hydrogen compound of n valence in a form derived by loss of n protons from an active-hydrogen compound which has at most 8 active hydrogen atoms on oxygen atoms or nitrogen atoms. Terms a, b, c and d each represent a positive integer of 3 or less or 0, where all of them cannot be 0 simultaneously. R is the same or different hydrocarbon group having 1 to 10 carbon atom(s), wherein the two Rs on the same nitrogen atom may be bonded together to form a ring structure.

In the formula (4), Me represents a methyl group. Here a', b', c', and d' are 0 or 1, wherein all of them cannot be 0 simultaneously.
Examples of the above-mentioned phosphazenium salt of the active-hydrogen compound indicated by the formula (3) include dimethylamino-tris[tris(dimethylamino)phosphoranylidenamino] phosphonium tetrafluoroborate, tetrakis[tri(pyrrolidin-1-yl)phosphoranylidenamino] phosphonium tetrafluoroborate, tetrakis[tris(dimethylamino)phosphoranylidenamino] phosphonium chloride and diethylamino-tris[tris(diethylamino)phosphoranylidenamino] phosphonium tetrafluoroborate. Among these, tetrakis[tris(dimethylamino)phosphoranylidenamino] phosphonium chloride is preferred.

Examples of the phosphazenium hydroxide indicated by the above-mentioned formula (4) include tetrakis[tris(dimethylamino)phosphoranylidenamino] phosphonium hydroxide and (dimethylamino)tris[tris(dimethylamino)phosphoranylidenamino] phosphonium hydroxide. Among these, tetrakis[tris(dimethylamino)phosphoranylidenamino] phosphonium hydroxide is preferred.

The above-mentioned active-hydrogen compound is not limited as long as it may be an active-hydrogen compound normally used for the manufacture of polyoxyalkylene polyols. Examples thereof include hydroxyl group containing organic compounds such as: alkylene glycols such as ethylene glycol and propylene glycol; triols such as glycerin, and trimethylolpropane; tetraols such as pentaerythritol and diglycerin; hexaols such as sorbitol; and sucrose. Such compounds can be used alone or can be used with two kinds of compounds combined.

Examples of the alkylene oxides include ethylene oxide and propylene oxide. These can be used alone or can be used with two kinds of compounds combined. Among these, propylene oxide used alone, or ethylene oxide and propylene oxide used together is preferable. That is to say, the above-mentioned polyoxyalkylene polyol preferably contains at least an oxypropylene unit.

Moreover, within one molecule of the above-mentioned polyoxyalkylene polyol there preferably exists 1 to 8 hydroxyl group(s) and more preferably 2 to 5 hydroxyl groups. When the number of hydroxyl groups in the polyoxyalkylene polyol is in the above-mentioned range, change of property with time, such as increase of viscosity, when mixed with a compound having a functional group that can react with the hydroxyl group, is least likely to occur.

In the present invention, the polyoxyalkylene polyol is used in an amount of generally 40 to 95 parts by weight, preferably 50 to 90 parts by weight, and more preferably 60 to 85 parts by weight relative to 100 parts by weight of the sum of the polyoxyalkylene polyol and vinyl monomer. When the use amount of the polyoxyalkylene polyol is in the above-mentioned range, it is possible to obtain the grafted polyether polyol, which is useful as raw material for a polyurethane resin cured article that has more excellent mechanical strength, long-term weathering resistance, and bleeding resistance, and is excellent in colorless-transparency and compatibility. When the use amount of the polyoxyalkylene polyol is less than the above-mentioned lower limit, viscosity markedly increases, and difficulty in handling may be caused. Moreover, worsening of degree of colorless-transparency of the obtained (meth)acrylate-grafted polyether polyol may be caused and the turbidity of the obtained polyol may be resulted. Furthermore, when the obtained (meth)acrylate-grafted polyether polyol is used as a raw material of the polyurethane resin cured article, flexibility of the cured article declines, and worsening of mechanical strength may be caused. On the other hand, when the use amount of the polyoxyalkylene polyol exceeds the above-mentioned upper limit, there is a possibility that compatibility of the (meth)acrylate-grafted polyether polyol may decline. Moreover, when the obtained (meth)acrylate-grafted polyether polyol is used as raw material of the polyurethane resin cured article, there is a possibility that weathering resistance of the cured article declines.

### (Vinyl Monomer)

The vinyl monomer used in the present invention is the (meth)acrylate indicated by the above-mentioned formula (1) and/or the hydroxyl group-containing (meth)acrylate indicated by the above-mentioned formula (2) (hereinafter, these are referred to together as the "(meth)acrylates"). These (meth)acrylates are contained at a concentration relative to 100% by weight of the total vinyl monomer which is not less than 50% by weight, preferably is not less than 70% by weight, and more preferably is not less than 90% by weight. By grafting vinyl monomer containing the above-mentioned (meth)acrylates within the above-mentioned range, a grafted polyether polyol is obtained that is excellent in colorless-transparency and compatibility, and the polyurethane cured article using this grafted polyether polyol is colorless and transparent and exhibits excellent mechanical strength and long-term weathering resistance.

In the above-mentioned formulae (1) and (2), R¹ is a hydrogen atom or a methyl group, and a methyl group is preferred from a viewpoint of weathering resistance and handling. R² preferably is an alkyl group having 1 to 18 carbon atom(s) or an aralkyl group having 7 to 18 carbon atoms, more preferably is an alkyl group having 1 to 18 carbon atom(s), and particularly preferably is an alkyl group having 4 to 18 carbon atoms. R³ is an alkylene group having 1 to 18 carbon atom(s) and preferably is an alkylene group having 2 to 18 carbon atoms.

Examples of the alkyl group having 1 to 18 carbon atom(s)are such as methyl group, ethyl group, propyl group, butyl group, 2-ethylhexyl, cyclohexyl group, dicyclopentanyl group, isobornyl group, lauryl group, tridecyl group and stearyl group. Among these, butyl group and 2-ethylhexyl group are preferred.

Examples of the aralkyl group having 7 to 18 carbon atoms are such as phenylene group and benzyl group.
Examples of the alkylene group having 1 to 18 carbon atom(s) are such as methylene group, ethylene group, 1-methylethylene group, propylene group and butylene group. Among these, ethylene group and propylene group are preferred.

The other vinyl monomers, which can be suggested for combined use with the above-mentioned (meth)acrylates, include acrylonitrile, styrene, acrylamide, vinyl esters such as vinyl acetate, vinyl ethers such as ethyl vinyl ether. These vinyl monomers may be used alone or may be used as combined with two or more kinds of vinyl monomers.

In the present invention, the vinyl monomer containing the above-mentioned (meth)acrylates is preferably used at an amount of normally 5 to 60 parts by weight, preferably 10 to 50 parts by weight, and more preferably 15 to 40 parts by weight relative to 100 parts by weight of the total of the polyoxyalkylene polyol and vinyl monomer. When the use amount of the vinyl monomer is within the above-mentioned range, it is possible to obtain a grafted polyether polyol, which is excellent in colorless-transparency and compatibility and is useful as a raw material for a polyurethane resin cured article having excellent mechanical strength, long-term weathering resistance and bleed resistance.

### (Radical Reaction Initiator)

In the present invention, an alkyl peroxide is used as a radical reaction initiator when carrying out the grafting reaction. Examples of the alkyl peroxide used for the present invention include dialkyl peroxides such as di-tert-butyl peroxide, di-tert-hexyl peroxide, α,α'-bis(tert-butylperoxy)diisopropylbenzene, dicumyl peroxide, 2,5-dimethyl-2,5-bis(tert-butylperoxy)hexane and tert-butyl cumyl peroxide; peroxy esters such as tert-butylperoxy neodecanoate, tert-butylperoxy pivalate, tert-butylperoxy 2-ethylhexanoate, tert-butylperoxy isobutyrate, tert-butylperoxy benzoate and tert-butylperoxy acetate; peroxyketals such as 1,1-bis(t-butylperoxy)-2-methylcyclohexane, 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 2,2-bis(4,4-dibutylperoxycyclohexyl)propane, 2,2-bis(t-butylperoxy)butane and n-butyl 4,4-bis(t-butylperoxy)valerate.

Such alkyl peroxides may be used alone or may be used as combined with two or more kinds of alkyl peroxides. Among these alkyl peroxides, from a viewpoint of colorless-transparency of the thus obtained (meth)acrylate-grafted polyether polyol, 1,1-bis(t-butylperoxy)-cyclohexane and di-t-butyl peroxide are more preferred. In the present invention, the desirable use amount of the alkyl peroxide is normally 0.1 to 5 mol relative to 1 mol of hydroxyl group of the polyoxyalkylene polyol. When the use amount of the alkyl peroxide is within the above-mentioned range, the grafting reaction of the above mentioned polyoxyalkylene polyol and the above-mentioned vinyl monomer can be suitably performed.

### (Grafting Reaction)

When the above-mentioned grafting reaction is performed, adding vinyl monomer to the polyoxyalkylene polyol preferably carried out the reaction. From a viewpoint of colorless-transparency of the obtained (meth)acrylate-grafted polyether polyol, the reaction temperature is preferably 100°C to 200°C, more preferably 110°C to 180°C, and most preferably 120°C to 160°C. When the grafting reaction temperature is below the above-mentioned lower limit, the reaction time required may be prolonged and productivity may decline. Moreover, the vinyl monomer may homo-polymerize. The homopolymer of the vinyl monomer has bad compatibility with the polyoxyalkylene polyol, causes turbidity, and causes a decline in colorless-transparency. On the other hand, when the grafting reaction temperature exceeds the above-mentioned upper limit, thermal degradation of the polyoxyalkylene polyol may occur, and there is a possibility that the mechanical strength of the polyurethane resin cured article declines. Moreover, since the radical polymerization initiator also decomposes, a large amount of the unreacted monomer remains. Therefore in addition to requiring work to remove the unreacted monomer, there is a possibility that it cases a decline of weathering resistance of the polyurethane resin cured article due to lowering of the graft ratio. Furthermore there is also a difficulty in controlling temperature at high temperatures.

Although the vinyl monomer may be added in the whole amount at a time or may be added successively, when the vinyl monomer is added in the whole amount at a time, temperature may rapidly rise due to heat of reaction. Thus successive addition is preferred. The addition time (drop time required for the addition) of the vinyl monomer is preferably 5 to 600 min., more preferably 60 to 450 min., and most preferably 120 to 300 min. When the vinyl monomer is added drop-wise over a time in the above-mentioned range, the rapid temperature rise due to the heat of reaction can be prevented, and the grafting reaction can proceed steadily. Preferably the vinyl monomer is mixed in advance with a part of the polyoxyalkylene polyol, and the mixture is then added to the remaining polyoxyalkylene polyol. The grafting reaction takes place steadily by adding the vinyl monomer in this manner.

In the present invention, after a specified amount of the vinyl monomer is added to the polyoxyalkylene polyol, the graft reaction is kept at the above-mentioned reaction temperature for aging. The reaction time for the aging is preferably 5 to 600 min., more preferably 60 to 450 min., and most preferably 120 to 300 min. Thereafter, the unreacted monomer is removed by a reduced pressure treatment and the like to obtain the grafted polyether polyol of the present invention.

The grafted polyether polyol of the present invention, when measured by spectrophotometer, has a light transmittance at 300 nm of 30% or less, preferably 25% or less, and particularly preferably 20% or less. Moreover, light transmittance at 500 nm is preferably 90% or greater and more preferably 93% or greater. The grafted polyether polyol, which has transmittance at 300 nm within the above-mentioned range, has sufficient amount of graft chains and is excellent in compatibility with acrylic resin. The grafted polyether polyol, which has transmittance at 500 nm within the above-mentioned range, has excellent transparency in the visible light region.

### [Polyurethane Resin Composition and Cured Article Thereof]

The grafted polyether polyol of the present invention is suitable for use as a raw material of a one-component curable or two-component curable polyurethane resin composition. Moreover, such polyurethane resin composition is suitable for use as an adhesive or a waterproofing material.

In the above-mentioned polyurethane resin composition, the grafted polyether polyol may be used alone or can be used in a combination with another active-hydrogen compound in such an amount that the effect of the present invention is not impaired. Examples of the other active-hydrogen compounds include polyols used for general one-component or two-component curable polyurethane resin compositions. Specific examples include glycerin; sucrose; pentaerythritol; sorbitol; trimethylolpropane; diglycerin and glycols such as ethylene glycol, diethylene glycol, triethylene glycol, propylene glycol, dipropylene glycol, 1,3-propanediol, 1,4-butanediol, 1,3-butanediol, 1,2-butanediol, 1,6-hexanediol, trimethylpentanediol, 1,4-cyclohexanediol, 1,4-cyclohexanedimethanol, neopentyl glycol, and 8-octanediol. The above-mentioned polyoxyalkylene polyol may also be used as the other active-hydrogen compound.

An organic isocyanate compound is used as a curing agent for the polyurethane resin composition. No particular limitation is placed on the organic isocyanate compound used here as long as the organic isocyanate compound is an isocyanate group-containing compound generally used for one-component or two-component curable polyurethane resin compositions. For example, aliphatic polyisocyanates, alicyclic polyisocyanates, aromatic-aliphatic polyisocyanates, aromatic polyisocyanates and derivatives and modified forms of these isocyanates are mentioned.

Further, various types of conventionally known additives such as curing catalysts, antioxidants, ultraviolet absorber, flame retardants, stabilizers and plasticizers may be added to the polyurethane resin composition.
The cured article obtained from such polyurethane resin composition is colorless and transparent, has excellent mechanical strength and weathering resistance, and is particularly resistant to deterioration such as deformation even on prolonged exposure to ultraviolet light.

### [Working Examples]

Although the present invention is explained further using working examples, the present invention is not limited by these working examples.

Analysis and measurements in the working examples and comparative examples were carried out according to the methods listed below.
(1) Properties of Polyoxyalkylene Polyol and Grafted Polyol
   (i) Hydroxyl number:
      The hydroxyl number was measured according to section 6.4 "Hydroxyl number" in JIS K1557 "Test methods of polyethers for polyurethane".
   (ii) Viscosity:
      Viscosity was measured according to section 6.3 "Viscosity" in JIS K1557.
   (iii) Polymer Content within Grafted Polyol:
      Polymer content in the (meth)acrylate-grafted polyether polyol was defined as an amount of polymer derived from vinyl monomer used for the reaction of the polyoxyalkylene polyol and the vinyl monomer. The amount of unreacted vinyl monomer was estimated using gas chromatography under the following conditions, and the value was subtracted from the fed amount of vinyl monomer.
      **.** Gas chromatograph: GC-14A manufactured by Shimadzu Corporation
      **.** Carrier gas: helium, 30 mL/min.
      . Column: G-300 made by Chemical Evaluation and Research Institute, with an inner diameter of 1.2 mm, length of 40 m, and film thickness of 1.0 µm.
      · Column temperature condition: The column was held at 90°C for 6 min., the temperature was raised thereafter at a rate of 20°C/min., and the column was held at 200°C for 8 min.
   (iv) Appearance
      Appearance was visually observed at room temperature (20°C to 25°C).
   (v) Light Transmittance
      Light transmittance was measured under conditions described below using a UV-visible spectrophotometer (U-4100, manufactured by Hitachi, Ltd.). Resulted transmittances at 300 nm and 500 nm were shown. The light transmittance at 300 nm, which is in the ultraviolet region, is caused by the structure of the grafted polyol. The light transmittance at 500 nm, which is in the visible region, is an indicator, which reflects visual colorless-transparency.
      · Measurement method: transmission method
      · Measurement mode: wavelength measurement
      · Data mode: transmittance (0 to 100%)
      · Scan speed: 300 nm/min.
      · Slit width: 6.00 nm (fixed)
      · Sampling interval: 1.00 nm
      · Detector: integrating sphere / photomultiplier tube
      · Cell: quartz cell with an optical path length of 10 mm
      · Reference: hexane
      · Measurement wavelength range: 900 to 200 nm
      · Baseline correction: After the baseline was acquired with a reference cell and a sample cell both filled with hexane, the sample was put in the sample cell, and transmittance was measured.

(2) Characteristics of Polyurethane Resin Cured Article
   (i) Appearance
      The appearance was visually observed at room temperature (20°C to 25°C).
   (ii) Bleed Resistance
      A 40 mm × 40 mm × 2 mm polyurethane resin cured article was placed on top of a paper and left for 16 hours in a dryer at 80°C. Thereafter, condition of the paper was observed visually and was evaluated based on the criteria listed below.
      A: There was no trace of bleeding (no change).
      B: A slight amount of bleeding was observed.
      C: Evidence of bleeding was clearly recognized.
      D: Bleeding wetted the paper.
   (iii) Weathering resistance
      A 40 mm × 40 mm × 2 mm polyurethane cured article was subjected to weathering resistance testing under the conditions listed below using a DAIPLA METALWEATHER (KU-R5NCI, manufactured by Daipla Wintes Co., Ltd.). Changes of shape of the sheet were evaluated according to criteria listed below. Furthermore, in order to accelerate weathering resistance test, no stabilizers such as ultraviolet radiation absorption agents and antioxidants were added except ones such as glycerin that were contained in a raw material in advance
      · Illumination intensity: 80 mW/cm²
      · Temperature: 60°C
      · Humidity: 50%
      · Shower frequency: 1 time per 10 hours
      · Test time interval: 20 hours
         A: The rectangular solid shape was maintained although bleed out was observed partially.
         B: A part of the article was melted, and the corners were disappeared.

### [Preparation Example 1]

### (Preparation of Polyol (A))

Glycerin and 0.18 mol% of phosphazenium hydroxide relative to hydroxyl groups of the glycerin were loaded in an autoclave, and inside pressure of the autoclave was reduced. Then propylene oxide was added successively such that internal pressure of the autoclave did not exceed 0.4 MPaG, and the autoclave was heated to 95°C, and propylene oxide was addition polymerized to glycerin. The yielded crude polyol was subjected to an absorption treatment using an aluminum silicate absorbing agent and filtered to obtain polyol (A). The polyol (A) was a polyoxypropylene triol having a hydroxyl number of 18.7 mg KOH/g, and a viscosity of 2400 mPa·s/25°C.

### [Preparation Example 2]

### (Preparation of Polyol (B))

Dipropylene glycol and 8.5 mol% of cesium hydroxide relative to hydroxyl groups of the dipropylene glycol were loaded in an autoclave, and inside pressure of the autoclave was reduced. Then propylene oxide was added successively such that internal pressure of the autoclave did not exceed 0.4 MPaG, the autoclave was heated to 95°C, and propylene oxide was addition polymerized to dipropylene glycol. The yielded crude polyol was neutralized using phosphoric acid and filtered to obtain polyol (B). The polyol (B) was a polyoxypropylene polyol having a hydroxyl number of 20.4 mg KOH/g, and a viscosity of 1500 mPa·s/25°C.

### [Preparation Example 3]

### (Preparation of Polyol (C))

Dipropylene glycol and 6 mol% of potassium hydroxide relative to hydroxyl groups of the dipropylene glycol were loaded in an autoclave, and inside pressure of the autoclave was reduced. Then propylene oxide was added successively such that internal pressure of the autoclave did not exceed 0.4 MPaG, the autoclave was heated to 110°C, and propylene oxide was addition polymerized to dipropylene glycol. The yielded crude polyol was neutralized using phosphoric acid and filtered to obtain polyol (C). The polyol (C) was a polyoxypropylene polyol having a hydroxyl number of 37.4 mg KOH/g, and a viscosity of 600 mPa·s/25°C.

### [Example 1]

### (Production of (Meth)acrylate-grafted Polyether Polyol)

In a 1-L flask equipped with a stirrer, a thermometer, a nitrogen feed port, a monomer feed tube, and a water-cooled condenser, was loaded 929.7 parts by weight of the polyol (A), and the flask was heated to 120°C in an oil bath. Thereafter, a mixed solution was added drop-wise to the flask at a uniform rate over 4 hours, wherein the mixed solution was obtained by uniformly mixing 29.4 parts by weight of n-butyl (meth)acrylate and 41.0 parts by weight of 2-ethylhexyl (meth)acrylate as the vinyl monomers and 19.2 parts by weight of PERHEXA C (trade name of 1,1-bis(t-butylperoxy)cyclohexane, diluted in hydrocarbon as 70% purity; produced by Nippon Oil & Fat Co., Ltd.;,) as a radical reaction initiator. The mixture was then allowed to react for 4 hours. Thereafter, 2 hours of reduced pressure treatment was performed under conditions of 1.3 kPa or lower and 120°C to remove unreacted monomer and obtain a (meth)acrylate-grafted polyether polyol (G1). This grafted polyether polyol (G1) had a hydroxyl number of 17.5 mg KOH/g, a viscosity of 3100 mPa·s/25°C, and appearance was colorless and transparent. Other physical properties are indicated in Table 1.

### [Examples 2 to 7]

### (Preparation of Methacrylate-grafted Polyether Polyols)

Methacrylate-grafted polyether polyols (G2) - (G7) were obtained in the same manner of the example 1 except for respective changes of the types and quantities of the polyoxyalkylene polyol, vinyl monomer, and radical reaction initiators as mentioned in Table 1 through Table 3. Physical properties of these grafted polyether polyols are shown in Table 1 through Table 3.

### [Example 8]

### (Production of Methacrylate-grafted Polyether Polyol)

Methacrylate-grafted polyether polyol (G8) was obtained in the same manner of the example 1 except for respective changes of the types and quantities of the polyoxyalkylene polyol, vinyl monomer, and radical reaction initiators as mentioned in Table 3 and except for a change of the reaction temperature to 150°C. Physical properties of this methacrylate-grafted polyether polyol are shown in Table 3.

### [Reference Examples 1 through 3]

The Polyols (A) through (C) were measured for respective appearance and light transmittance. Results are shown in Table 4.

### [Comparative Example 1]

### (Production of Methacrylate-grafted Polyether Polyol)

Methacrylate-grafted polyether polyol (g1) was obtained in the same manner of the example 1 except that the types and quantities of the polyoxyalkylene polyol, vinyl monomer and radical reaction initiators were changed to those as mentioned in Table 5. Large particles of the methacrylate-grafted polyether polyol (g1) precipitated out, and the product was non-uniform. Thus physical properties could not be measured.

### [Comparative Example 2]

### (Production of Methacrylate-grafted Polyether Polyol)

Methacrylate-grafted polyether polyol (g2) was obtained in the same manner of the example 1 except for respective changes of the types and quantities of the polyoxyalkylene polyol, vinyl monomer, and radical reaction initiators as mentioned in Table 5 and except that reaction temperature was changed to 130°C. Physical properties of the grafted polyether polyol are shown in Table 5.

[Table 1]

**Table 1**

| | | | Example 1 | Example 2 | Example 3 |
|---|---|---|---|---|---|
| Polyoxyalkylene polyol | Type | | Polyol (A) | Polyol (A) | Polyol (A) |
| | Hydroxyl number | mg KOH/g | 18.7 | 18.7 | 18.7 |
| | Initial loading | parts by weight | 929.7 | 898.1 | 815.0 |
| Vinyl monomer | n-butyl methacrylate | parts by weight | 29.4 | 42.6 | 77.3 |
| | 2-ethylhexyl methacrylate | parts by weight | 41.0 | 59.4 | 107.7 |
| | Methyl methacrylate | parts by weight | 0.0 | 0.0 | 0.0 |
| Fraction of vinyl monomer relative to total of polyol and vinyl monomer | | weight % | 7 | 10 | 19 |
| PERHEXA C | | parts by weight | 19,2 | 18.6 | 16.8 |
| Radical reaction initiator | PERBUTYL D | parts by weight | 0 | 0 | 0 |
| | PERBUTYL O | parts by weight | 0 | 0 | 0 |
| | AIBN | parts by weight | 0 | 0 | 0 |
| Total loaded quantity | | parts by weight | 1019.3 | 1018.7 | 1016.8 |
| Moles of radical reaction initiator per 1 mol of hydroxyl group of the polyol | | mol/l mol hydroxyl group of polyol | 0.33 | 0.33 | 0.33 |
| Reaction temperature | | °C | 120 | 120 | 120 |
| Drop-wise addition time | | hours | 4 | 4 | 4 |
| Aging time | | hours | 4 | 4 | 4 |
| Grafted polyether polyol | | | G1 | G2 | G3 |
| Hydroxyl number | | mg KOH/g | 17.5 | 16.7 | 15.2 |
| Viscosity | | mPa·s/25°C | 3100 | 3500 | 5500 |
| Content of polymer (GC method) | | % | 7.0 | 10.2 | 18.5 |
| Appearance (room temperature) | | | Colorless and transpare nt | Colorless and transpare nt | Colorless and transpare nt |
| Light transmittance (300 nm) | | % | 9 | 16 | 15 |
| Light transmittance (500 nm) | | % | 100 | 100 | 94 |

| | | | | | |
|---|---|---|---|---|---|
| PERHEXA C: Produced by Nippon Oil & Fat Co., Ltd., 1-1-bis(t-butylperoxy)cyclohexane. PERBUTYL D: Produced by Nippon Oil & Fat Co., Ltd., di-t-butyl peroxide. PERBUTYL O: Produced by Nippon Oil & Fat Co., Ltd., t-butyl peroxy-2-ethylhexanoate. AIBN: 2,2'-azobisisobutyronitrile (trade name: V-60, produced by Wako Pure Chemical Industries Ltd.) | | | | | |

[Table 2]

**Table 2**

| | | | Example 4 | Example 5 | Example 6 |
|---|---|---|---|---|---|
| Polyoxyalkylene polyol | Type | | Polyol (A) | Polyol (A) | Polyol (A) |
| | Hydroxyl value | mg KOH/g | 18.7 | 18.7 | 18.7 |
| | Initial loading | parts by weight | 800.0 | 700.0 | 400.0 |
| | n-butyl methacrylate | parts by weight | 200.0 | 300.0 | 600.0 |
| Vinyl monomer | 2-ethylhexyl methacrylate | parts by weight | 0.0 | 0 | 0 |
| | Methyl methacrylate | parts by weight | 0.0 | 0 | 0 |
| Fraction of vinyl to total of polyol monomer | monomer relative and vinyl | weight % | 20 | 30 | 60 |
| Radical reaction initiator | PERHEXA C | parts by weight | 30.0 | 42.8 g | 42.8 |
| | PERBUTYL D | parts by weight | 0 | 0 | 0 |
| | PERBUTYL O | parts by weight | 0 | 0 | 0 |
| | AIBN | parts by weight | 0 | 0 | 0 |
| Total loaded quantity | | parts by weight | 1030.0 | 1042.8 | 1042.8 |
| Moles of radical reaction initiator per 1 mol of hydroxyl group of the polyol | | mol/l mol hydroxyl polyol | 1.65 | 1.01 | 0.58 |
| Reaction temperature | | °C | 120 | 120 | 120 |
| Drop-wise addition time | | hours | 4 | 4 | 4 |
| Aging time | | hours | 4 | 4 | 4 |
| Grafted polyether polyol | | | G4 | G5 | G6 |
| Hydroxyl number | | mg KOH/g | 15.3 | 13.8 | 9.7 |
| Viscosity | | mPa·s/25°C | 6300 | 12000 | 1,000,000 |
| Content of polymer (GC method) | | % | 19.6 | 28.9 | 59.1 |
| Appearance (room temperature) Appearance (room temperature) | | | Colorless and transpare nt | Colorless and transpare nt | Colorless and transpare nt |
| Light transmittance (300 nm) | | % | 9 | 7 | 4 |
| Light transmittance (500 nm) | | % | 99 | 99 | 99 |

| | | | | | |
|---|---|---|---|---|---|
| PERHEXA C: Produced by Nippon Oil & Fat Co., Ltd., 1-1-bis(t-butylperoxy)cyclohexane. PERBUTYL D: Produced by Nippon Oil & Fat Co., Ltd., di-t-butyl peroxide. PERBUTYL O: Produced by Nippon Oil & Fat Co., Ltd., t-butyl peroxy-2-ethylhexanoate. AIBN: 2,2'-azobisisobutyronitrile (trade name: v-60, produced by Wako Pure Chemical Industries Ltd.) | | | | | |

[Table 3]

**Table 3**

| | | | Example 7 | Example 8 |
|---|---|---|---|---|
| | Type | | Polyol (B) | Polyol (B) |
| Polyoxyalkylene | Hydroxyl number | mg KOH/g | 20.4 | 20.4 |
| polyol | Initial loading | parts by weight | 889.8 | 801.5 |
| | n-butyl methacrylate | parts by weight | 46.0 | 198.5 |
| Vinyl monomer | 2-ethylhexyl methacrylate | parts by weight | 64.2 | 0 |
| | Methyl methacrylate | parts by weight | 0 | 0 |
| Fraction of vinyl monomer relative to total of polyol and vinyl monomer | | weight % | 11 | 20 |
| Radical reaction initiator | PERHEXA C | parts by weight | 30.1 | 0 |
| | PERBUTYL D | parts by | 0 | 10.6 |
| | PERBUTYL O | parts by weight | 0 | 0 |
| | AIBN | parts by weight | 0 | 0 |
| Total loaded quantity | | parts by weight | 1030.1 | 1010.6 |
| Moles of radical reaction initiator per 1 mol of hydroxyl group of the polyol | | mol/l mol hydroxyl group of polyol | 0.33 | 0.50 |
| Reaction temperature | | °C | 120 | 150 |
| Drop-wise addition | time | hours | 4 | 4 |
| Aging time | | hours | 4 | 4 |
| Grafted polyether | polyol | | G7 | G8 |
| Hydroxyl number | | mg KOH/g | 16.6 | 16.4 |
| Viscosity | | mPa·s/25°C | 2600 | 4400 |
| Content of polymer | (GC method) | % | 11.0 | 18.4 |
| Appearance (room temperature) | | | Colorless and transparent | Colorless and transparent |
| Light transmittance | (300 nm) | % | 7 | 10 |
| Light transmittance | (500 nm) | % | 100 | 100 |

| | | | | |
|---|---|---|---|---|
| PERHEXA C: Produced by Nippon Oil & Fat Co., Ltd., 1-1-bis(t-butylperoxy)cyclohexane. PERBUTYL D: Produced by Nippon Oil & Fat Co., Ltd., di-t-butyl peroxide. PERBUTYL O: Produced by Nippon Oil & Fat Co., Ltd., t-butyl peroxy-2-ethylhexanoate. AIBN: 2,2'-azobisisobutyronitrile (trade name: v-60, produced by Wako Pure Chemical Industries Ltd.) | | | | |

[Table 4]

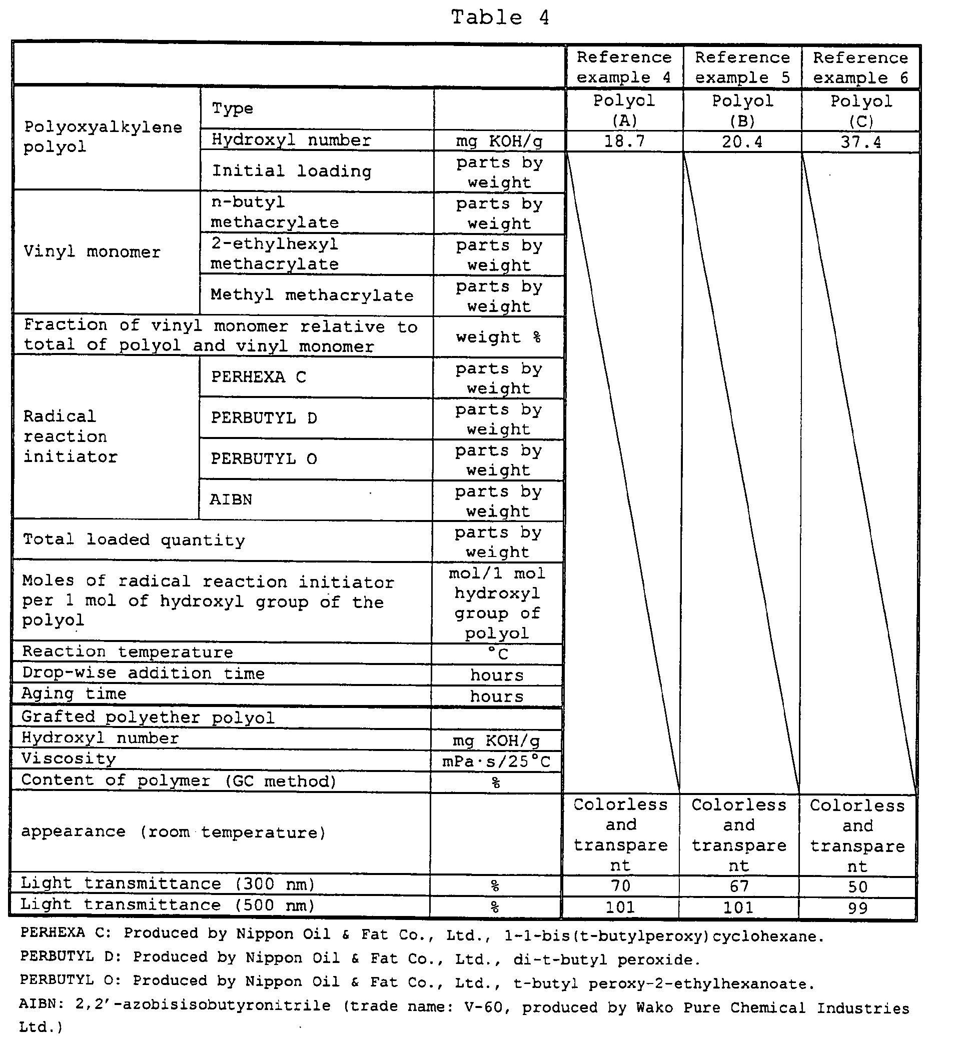

[Table 5]

**Table 5**

| | | | Comparative example 1 | Comparative example 2 |
|---|---|---|---|---|
| | Type | | Polyol (A) | Polyol (C) |
| Polyoxyalkylene | Hydroxyl number | mg KOH/g | 18.7 | 37.4 |
| polyol | Initial loading | parts by weight | 815.0 | 800.0 |
| | n-butyl methacrylate | parts by weight | 77.3 | 0 |
| Vinyl monomer | 2-ethylhexyl methacrylate | parts by weight | 107.7 | 0 |
| | Methyl methacrylate | parts by weight | 0 | 200.0 |
| Fraction of vinyl monomer relative to total of polyol and vinyl monomer | | weight % weight % | 0 | 0 |
| Radical initiator | PERHEXA C | parts by weight | 0 | 0 |
| | PERBUTYL D | parts weight by | 0 | 0 |
| | PERBUTYL O | parts by weight | 0 | 20.0 |
| | AIBN | parts by weight | 6.5 | 0 |
| Total loaded quantity y | | parts weight by weight | 1006.5 | 1020.0 |
| Moles of radical reaction initiator per 1 mol of hydroxyl group of the polyol | | mol/l mol hydroxyl group of polyol | 0.33 | 0.35 |
| Reaction temperature | | °C | 120 | 130 |
| Drop-wise addition time | | hours | 4 | 4 |
| Aging time | | hours | 4 | 4 |
| Grafted polyether polyol | | | g1 | g2 31.5 |
| Hydroxyl number | | mg KOH/g | Measurement was not available due to precipitati on of large particles and non-uniformity. | |
| Viscosity | | mPa·s/25°C | | Not measured |
| Content of polymer (GC method) | | % | | 18.1 |
| Appearance (room temperature) | | | | White - turbid |
| Light transmittance (300 nm) | | % | | 4 |
| Light transmittance (500 nm) | | % | | 12 |

| | | | | |
|---|---|---|---|---|
| PERHEXA C: Produced by Nippon Oil & Fat Co., Ltd., 1-1-bis(t-butylperoxy)cyclohexane. PERBUTYL D: Produced by Nippon Oil & Fat Co., Ltd., di-t-butyl peroxide. PERBUTYL O: Produced by Nippon Oil & Fat Co., Ltd., t-butyl peroxy-2-ethylhexanoate. AIBN: 2,2'-azobisisobutyronitrile (trade name: V-60, produced by Wako Pure Chemical Industries, Ltd.). | | | | |

### [Example 9]

### (Production of Polyurethane Resin Cured Article)

After 2.79 parts by weight of 1,3-bis(isocyanatomethyl)cyclohexane (TAKENATE 600, produced by Mitsui Chemicals Polyurethanes, Inc.) and 0.02 parts by weight of 24% lead hexanoate as a curing catalyst was added to 100 parts by weight of the methacrylate-grafted polyether polyol (G4) obtained by the example 4. The mixture was then stirred to defoam for 15 min. Thereafter, the obtained composition was poured into a metal mold, which had been preheated to 110°C, within the obtained composition was still exhibiting fluidity. The mold was loaded in an oven at 100°C, and the composition was allowed to cure for 15 hours. Thereafter, the mold was picked up from the oven, and an article was demolded, and the article was further subjected to aging for 7 days at room temperature to obtain a polyurethane resin cured article (H1). Physical properties of the polyurethane resin (H1) are shown in Table 6.

### [Examples 10 & 11, Comparative Examples 3 & 4]

### (Production of Polyurethane Resin Cured Article)

Polyurethane resin cured articles (H2), (H3), (h1) and (h2) were produced in the same manner of the example 9 except that types and quantities of (meth)acrylate-grafted polyester polyol, polyoxyalkylene polyol, acrylic resin and isocyanate are changed to those mentioned in Table 5. Physical properties of these polyurethane resin cured articles are shown in Table 6.

[Table 6]

**Table 6**

| | | | Example 9 | Example 10 | Example 11 | Comparative example 3 | Comparative example 4 |
|---|---|---|---|---|---|---|---|
| Polyurethane resin cured article | | | H1 | H2 | H3 | h1 | h2 |
| Methacryla te-grafted polyether polyol | G4 | parts by weight | 100 | | | | |
| | G5 | parts by weight | | 100 | | | |
| | G6 | parts by weight | | | 50 | | |
| | Polyol (A) | parts by weight | | | 50 | 100 | 80 |
| | UP-1021 | parts by weight | | | | | 20 |
| Hydroxyl number of resin | | mg KOH/g | 15.3 | 13.8 | 14.8 | 19.9 | 15.9 |
| | Lead hexanoate | parts by weight | 0.02 | 0.02 | 0.02 | 0.02 | 0.02 |
| Total loaded quantity | | | 100.02 | 100.02 | 100.02 | 100.02 | 100.02 |
| Isocyanate | H6XDI | parts by weight | 2.79 | 2.52 | 2.70 | 3.62 | 2.90 |
| | NCO index | | 1.05 | 1.05 | 1.05 | 1.05 | 1.05 |
| Physical properties | Appearance | | Colorless and transparent | Colorless and transparent | Colorless and transparent | Colorless and transparent | Colorless and transparent |
| | Bleed resistance | | B | A | A | D | C |
| | Weathering resistance | | A | A | A | B | B |

| | | | | | | | |
|---|---|---|---|---|---|---|---|
| UP-1021: Acrylate plasticizer produced by Toa Gosei Co., Ltd. H6XDI: 1,3-bis(isocyanatomethyl)cyclohexane (TAKENATE 600, produced by Mitsui Chemicals Polyurethanes, Inc.). | | | | | | | |

## Claims

1. A (meth)acrylate-grafted polyether polyol obtained by reacting:
40 to 95 parts by weight of a polyoxy of a polyoxyalkylene polyol having a hydroxyl value of 25 mg KOH/g or less;
5 to 60 parts by weight of a vinyl monomer having at least 50% by weight of
a (meth)acrylate expressed by the formula (1) below and/or a (meth)acrylate having a hydroxyl group expressed by the formula (2) below, wherein total weight of the polyoxyalkylene polyol and the vinyl monomer is 100 parts by weight; and
0.1 to 5 mol of an alkyl peroxide, which is a radical reaction initiator, per 1 mol of hydroxyl group of the polyoxyalkylene polyol: 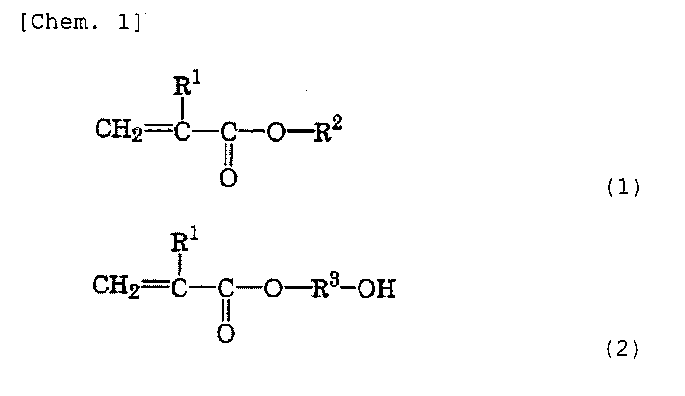 wherein, the formulae, R¹ represents a hydrogen atom or a methyl group; R² represents an alkyl group having 1 to 18 carbon atom(s) or an aralkyl group having 7 to 18 carbon atoms; and R³ represents an alkylene group having 1 to 18 carbon atom(s).

2. The (meth)acrylate-grafted polyether polyol according to claim 1; wherein the polyoxyalkylene polyol is obtained by addition polymerization of an alkylene oxide with an active-hydrogen compound in the presence of a phosphazenium catalyst.

3. The (meth)acrylate-grafted polyether polyol according to claim 1; wherein a light transmittance is 30% or less at 300 nm and is 90% or greater at 500 nm, when measured with a spectrophotometer.

4. The (meth)acrylate-grafted polyether polyol according to claim 1; wherein the polyoxyalkylene polyol has 1 to 8 hydroxyl group(s) within one molecule.

5. A two-component curable polyurethane resin composition using the (meth)acrylate-grafted polyether polyol according to claim 1.

6. A one-component curable polyurethane resin composition using the (meth)acrylate-grafted polyether polyol according to claim 1.

7. An adhesive comprising the (meth)acrylate-grafted polyether polyol according to claim 1.

8. A urethane resin cured article obtained by:
reacting and curing an organic isocyanate compound with the (meth)acrylate-grafted polyether polyol according to claim 1.

9. A production method for a (meth)acrylate-grafted polyether polyol comprising causing reaction of the following compounds:
40 to 95 parts by weight of a polyoxyalkylene polyol having a hydroxyl number of 25 mg KOH/g or less;
5 to 60 parts by weight of a vinyl monomer having at least 50% by weight of
a (meth)acrylate expressed by the formula (1) below and/or a (meth)acrylate having a hydroxyl group expressed by the formula (2) below, wherein the total weight of the polyoxyalkylene polyol and the vinyl monomer is 100 parts by weight; and
0.1 to 5 mol of an alkyl peroxide, which is a radical reaction initiator, per 1 mol of hydroxyl group of the polyoxyalkylene polyol: 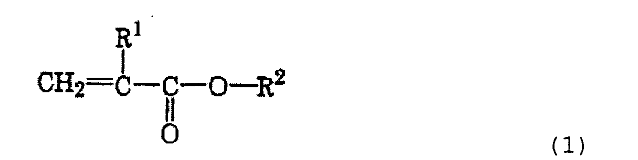 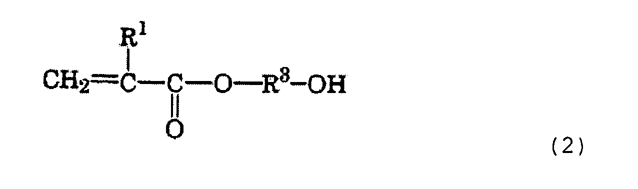 wherein, the formulae, R¹ represents a hydrogen atom or a methyl group; R² represents an alkyl group having 1 to 18 carbon atom(s) or an aralkyl group having 7 to 18 carbon atoms; and R³ represents an alkylene group 1 to 18 carbon atom(s).
